# FASCICULE DE BREVET EUROPEEN

(11) **EP 3 776 682 B1**
(45) Date de publication et mention de la délivrance du brevet: **09.02.2022**
(21) Numéro de dépôt: 19718436.9
(22) Date de dépôt: 20.03.2019
(51) Int. Cl.: H01L 51/52, B29C 70/86, B29C 65/48, B29C 65/00, B29C 70/46, F01D 5/28, B29L 31/08, B29K 705/00

(54) **PROCÉDÉ DE FABRICATION D'UNE AUBE EN MATÉRIAU COMPOSITE A BORD D'ATTAQUE MÉTALLIQUE RAPPORTÉ POUR TURBINE A GAZ**
VERFAHREN ZUR HERSTELLUNG EINER SCHAUFEL AUS VERBUNDWERKSTOFF MIT EINER METALLISCHEN VORDERKANTE FÜR EINE GASTURBINE
METHOD OF MANUFACTURING A COMPOSITE BLADE WITH A METALLIC LEADING EDGE FOR A GAS TURBINE

(30) Priorité: 28.03.2018 FR 1852675
(43) Date de publication de la demande: 17.02.2021
(73) Titulaire: SAFRAN, 75015 Paris (FR)
(72) Inventeur: BLANQUART, Magalie, 77550 MOISSY-CRAMAYEL (FR); FARRANDS, Maximilien, 77550 MOISSY-CRAMAYEL (FR); PICON, Romain, 77550 MOISSY-CRAMAYEL (FR)
(74) Mandataire: Cabinet Beau de Loménie
(86) Numéro de dépôt international: PCT/FR2019/050640
(87) Numéro de publication internationale: WO 2019/186029

(56) Documents cités:
- FR-A- 1 230 668
- US-A1- 2013 101 406

## Description

### Arrière-plan de l'invention

La présente invention se rapporte au domaine général de la fabrication d'aubes pour moteur aéronautique à turbine à gaz en matériau composite comprenant un bord d'attaque métallique.

La présence d'un clinquant métallique sur le bord d'attaque d'une aube de moteur aéronautique à turbine à gaz réalisée en matériau composite permet de protéger l'aubage composite de l'abrasion/érosion et lors de l'impact d'un corps étranger. Ceci est notamment le cas pour les aubes mobiles de soufflante d'une turbomachine aéronautique qui sont exposées à l'ingestion d'un oiseau, de grêle, de glace, etc. mais également pour des aubes fixes de redresseur ou distributeur de turbine à gaz.

Il existe de nombreux procédés pour réaliser une aube de moteur à turbine à gaz en matériau composite. On pourra citer par exemple le procédé manuel de stratifié/drapage, le procédé de moulage par injection d'une préforme fibreuse, le procédé de brodage, le procédé de thermo-compression, etc. Ces procédés sont principalement basés sur l'utilisation d'une résine thermodurcissable (TD) ou thermoplastique (TP).

Une fois l'aube en matériau composite obtenue, il est alors nécessaire d'assembler sur son bord d'attaque le clinquant métallique de protection. A cet effet, le clinquant métallique, qui est réalisé par des procédés mécaniques tels que l'estampage, le formage ou l'électroformage par exemple, est collé sur le bord d'attaque de l'aube en matériau composite. Cette opération peut être réalisée dans un moule assurant le collage du clinquant métallique. Des exemples d'aubes en matériau composite muni d'un clinquant métallique sur leur bord d'attaque sont notamment décrits dans les documents US2007092379 et US20160167269.

Le document US 2013/101406 A1 divulgue un procédé de fabrication d'une aube en matériau composite à bord d'attaque métallique tel que le bord avant d'une préforme est recouvert d'une feuille de protection en acier inoxydable et tel qu'une fine couche d'adhésif polyamide est placée entre la feuille de protection et le bord avant de la préforme composite.

Cependant, le collage du clinquant métallique sur le bord d'attaque de l'aube en matériau composite est une opération délicate, en particulier en ce qui concerne le contrôle de la reproductibilité de la mise en place et de la répartition du matériau adhésif entre l'aube et le clinquant. Si la couche de matériau adhésif n'est pas uniformément présente entre l'aube et le clinquant, la qualité du collage est dégradée, ce qui entraîne une diminution de la tenue mécanique du clinquant et, par conséquent, un risque de perte du clinquant en cas d'impact avec un objet ou sous sollicitation d'efforts de délaminage.

### Objet et résumé de l'invention

La présente invention a donc pour but principal de proposer un procédé de fabrication d'une aube en matériau composite munie d'un bord d'attaque métallique qui ne présente pas les inconvénients précités.

Conformément à l'invention, ce but est atteint grâce à un procédé de fabrication d'une aube en matériau composite à bord d'attaque métallique rapporté pour moteur aéronautique à turbine à gaz, le procédé comprenant :
- le drapage successif, sur un gabarit du bord d'attaque de l'aube à fabriquer, d'une première couche d'un matériau de base et d'une deuxième couche d'un matériau adhésif,
- le transfert des première et deuxième couches drapées dans la cavité d'un clinquant métallique,
- l'accostage du clinquant comprenant les première et deuxième couches drapées sur le bord d'attaque d'une préforme d'aube comprenant un renfort fibreux imprégné avec un précurseur d'une matrice,
- la cocuisson de la préforme d'aube et des première et deuxième couches drapées de manière à obtenir une aube en matériau composite comportant sur son bord d'attaque un clinquant métallique collé.

En conformant la première couche de matériau de base et la deuxième couche de matériau adhésif sur un gabarit correspondant à la forme du bord d'attaque de l'aube à fabriquer et en transférant ces couches du gabarit au clinquant, on assure une interface de fixation continue entre le clinquant et le bord d'attaque de la préforme. On évite ainsi l'apparition de porosités au fond de la cavité ou bec formé par le clinquant, ce qui améliore la tenue du clinquant sur l'aube tout en assurant une très bonne reproductibilité du positionnement de l'ensemble rapporté sur l'aube constitué par le clinquant, la couche de matériau de base et la couche de matériau adhésif.

Selon une première caractéristique particulière du procédé de l'invention, l'étape de transfert des première et deuxième couches drapées dans la cavité du clinquant métallique comprend le placement du clinquant métallique sur la couche de matériau adhésif et le retrait de l'ensemble formé par le clinquant et les première et deuxième couches du gabarit du bord d'attaque.

Selon une deuxième caractéristique particulière du procédé de l'invention, celui-ci comprend en outre, après le placement du clinquant métallique sur la couche de matériau adhésif et avant le retrait de l'ensemble formé par le clinquant et les première et deuxième couches drapées, la découpe des parties desdites première et deuxième couches drapées s'étendant au-delà du clinquant.

Selon une troisième caractéristique particulière du procédé de l'invention, celui-ci comprend en outre, avant le drapage des première et deuxième couches sur le gabarit du bord d'attaque, le dépôt d'une couche antiadhésive sur le gabarit. Cela permet de faciliter le retrait de l'ensemble constitué par le clinquant, la couche de matériau de base et la couche de matériau adhésif

Selon une quatrième caractéristique particulière du procédé de l'invention, celui-ci comprend en outre, avant le drapage des première et deuxième couches sur le gabarit du bord d'attaque, l'ajustement du clinquant sur le gabarit.

Selon une cinquième caractéristique particulière du procédé de l'invention, le matériau de base de la première couche est choisi parmi : fibres de verre, fils fins de bronze, fibres de carbone.

Selon une sixième caractéristique particulière du procédé de l'invention, le matériau adhésif de la deuxième couche est choisi parmi : adhésif époxy, adhésif époxy armé, film adhésif époxy, film adhésif époxy armé.

Le procédé de la présente invention s'applique notamment à la fabrication d'une aube de soufflante, d'une aube directrice de sortie, d'une aube directrice d'entrée, ou d'une aube à angle de calage variable.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 est une vue schématique en perspective d'une aube directrice de sortie selon un mode de réalisation de l'invention ;
- la figure 2 est une vue schématique en perspective montrant le drapage d'une couche de base et d'une couche adhésive sur un gabarit ;
- la figure 3 est une vue schématique en perspective montrant l'accostage d'un clinquant métallique sur le gabarit de la figure 2 ;
- la figure 4 est une vue schématique en perspective montrant le compactage de la couche de base et de la couche adhésive avec le clinquant métallique ;
- la figure 5 est une vue schématique en perspective montrant la découpe des portions de la couche de base et de la couche adhésive qui dépassent du clinquant métallique ;
- la figure 6 est une vue schématique en perspective montrant le retrait du clinquant métallique muni de la couche de base et de la couche adhésive du gabarit ;
- la figure 7 est une vue schématique en perspective montrant l'accostage du clinquant métallique muni de la couche de base et de la couche adhésive sur une préforme d'aube directrice de sortie puis la mise en moule de l'ensemble ;
- la figure 8 est une vue schématique montrant la cocuisson de la préforme d'aube de la figure 7 avec le clinquant métallique muni de la couche de base et de la couche adhésive dans un moule.

### Description détaillée de l'invention

L'invention s'applique à la réalisation d'aubes en matériau composite pour moteur aéronautique à turbine à gaz ayant un bord d'attaque métallique.

Des exemples non limitatifs de telles aubes sont notamment les aubes de soufflante, les aubes directrices de sortie (appelées OGV pour « Outlet Guide Vane »), les aubes directrices d'entrée (appelées IGV pour « Inlet Guide Vane »), les aubes à angle de calage variable (appelées VSV pour « Variable Stator Vane »), etc.

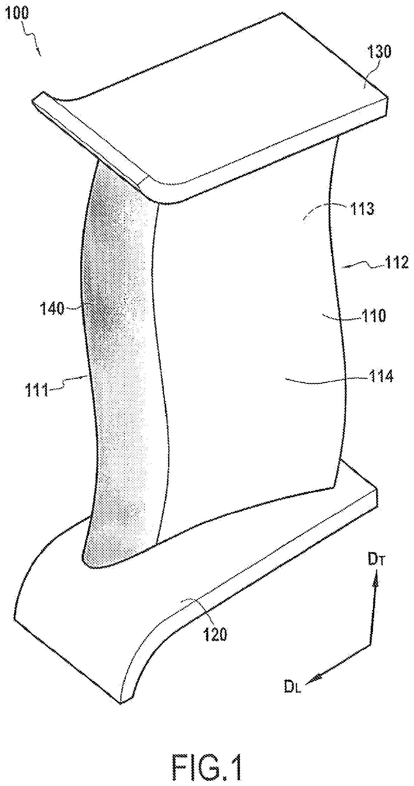

Un procédé conforme à l'invention va être décrit en relation avec la fabrication d'une aube directrice de sortie telle que l'aube 100 illustrée sur la figure 1 qui comprend un corps d'aube 110 s'étendant suivant une direction longitudinale D_{L} entre une plateforme interne 120 et une plateforme externe 130 et suivant une direction transversale D_{T} entre un bord d'attaque 111 et un bord de fuite 112. Le corps d'aube 110 comporte également une face intrados 113 et une face extrados 114. Un clinquant en matériau métallique 140 est en outre collé sur le corps d'aube 120 au niveau du bord d'attaque 111.

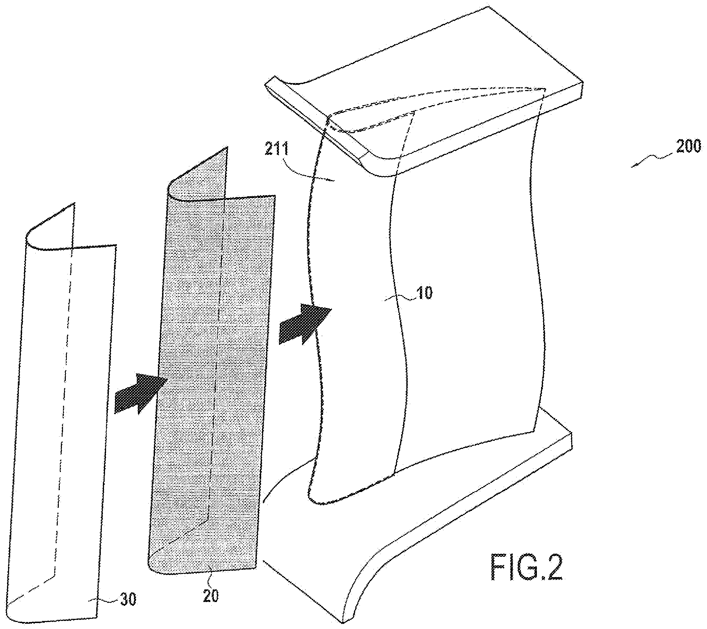

Le procédé de fabrication de l'aube 100 débute par le drapage successif sur un gabarit du bord d'attaque de l'aube à fabriquer, d'une première couche d'un matériau de base et d'une deuxième couche d'un matériau adhésif comme illustré sur la figure 2. Plus précisément, comme représenté sur la figure 2, on utilise un gabarit 200 comprenant au moins une portion 211 reproduisant la forme et les dimensions du bord d'attaque 111 de l'aube 100 à fabriquer. Le gabarit 200 peut être une pièce réalisée spécialement pour la mise en oeuvre du procédé de l'invention ou correspondre à une pièce rebutée ou encore correspondre à une pièce d'essai.

Avant le drapage, la portion 211 du gabarit 200 est de préférence recouverte d'une couche 10 constituée d'un matériau antiadhésif par exemple du polytétrafluoroéthylène (PTFE). Une première couche de matériau de base 20 est tout d'abord drapée sur la portion 211 recouverte ou non de la couche 10. La première couche 20 peut être une strate ou un pli bidirectionnel (tissé 2D) en un matériau choisi parmi un des matériaux suivants : fibres de verre, fils fins de bronze tels qu'utilisés dans le produit Bronze Mesh fabriqué par la société Lumicor^{®}, fibres de carbone. Une deuxième couche de matériau adhésif 30 est ensuite drapée sur la couche 20. La deuxième couche 20 peut être constituée d'un adhésif à base époxy, armé ou non, ou d'un film de matériau adhésif à base époxy, armé ou non. Le matériau adhésif peut par exemple correspondre à la résine époxy EA914 fabriquée par la société Hysol^{®}, au film adhésif AF191 fabriqué par la société 3M^{®}, au film adhésif FM300 fabriqué par la société Cytec^{®}, ou à la résine époxy EA9396 fabriquée par la société Hysol^{®}.

En drapant les couches 20 et 30 sur le gabarit 200, on conforme celles-ci suivant une géométrie correspondant exactement à celle du bord d'attaque de l'aube à réaliser.

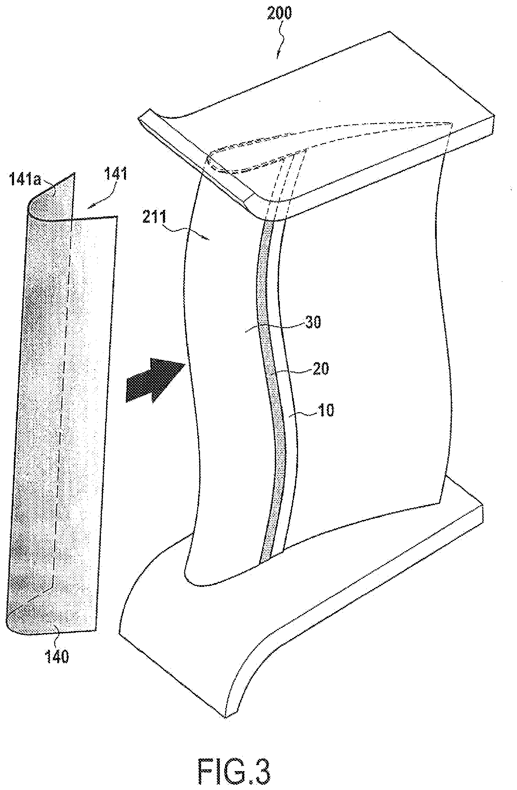

Une fois les première et deuxième couches 20 et 30 drapées sur la portion 211 du gabarit 200, un clinquant en matériau métallique 140 est placé sur la deuxième couche de matériau adhésif 30 comme illustré sur la figure 3. Le clinquant 140 peut être réalisé par exemple en inox. Le clinquant 140 présente une forme et des dimensions correspondant au bord de fuite de l'aube à fabriquer. Le clinquant 140 présente une forme en bec qui définit une cavité 141 sur la paroi 141a de laquelle vont être fixées les première et deuxième couches 20 et 30 drapées.

Avant le drapage des première et deuxième couches 20 et 30 sur le gabarit 200, le clinquant 140 peut être ajusté sur le gabarit 200. L'ajustement du clinquant 140 sur le gabarit 200 peut correspondre à un ajustement des dimensions du clinquant, par exemple sa longueur, et/ou de la forme du clinquant, par exemple sa courbure ou son vrillage. L'épaisseur du clinquant métallique étant très faible, sa conformation sur le gabarit est réalisée par pressions manuelles.

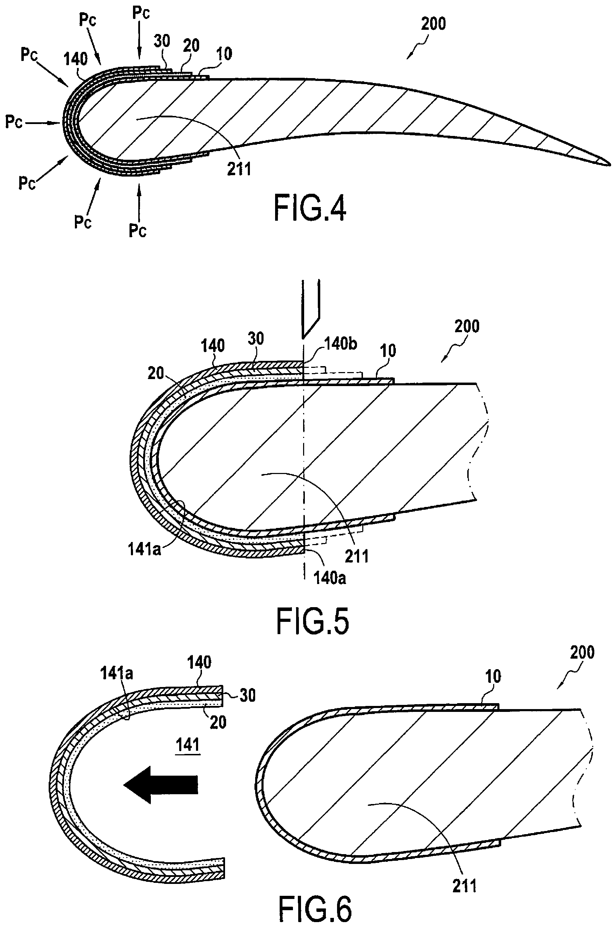

Les première et deuxième couches 20 et 30 peuvent être compactées en appliquant une pression de compactage Pc sur le clinquant 140 comme représenté sur la figure 4. A cet effet, le gabarit 200 muni des première et deuxième couches 20 et 30 et du clinquant 140 sont disposés dans un outillage (non représenté sur la figure 4) apte à exercer sur le clinquant 140 la pression de compactage Pc.

Comme représenté sur la figure 5, on procède ensuite à la découpe des parties des première et deuxième couches 20 et 30 qui s'étendent en dehors du clinquant 140, les bords 140a et 140b du clinquant étant utilisés pour tracer le trait de coupe sur le gabarit 200. Cette opération est facultative et, selon une variante de mise en œuvre, on laisse dépasser les première et deuxième couches 20 et 30 du clinquant 140.

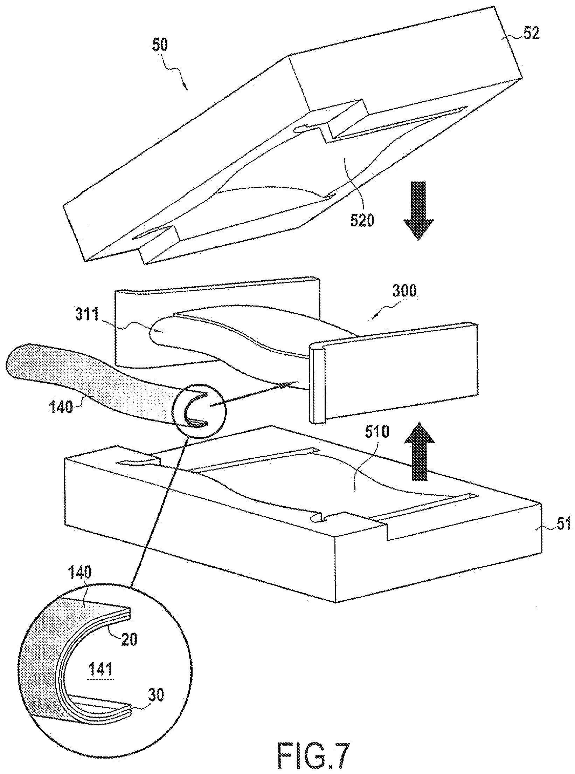

L'ensemble formé par le clinquant 140 et les première et deuxième couches 20 et 30 fixées sur la surface 141a de la cavité 141 du clinquant est retiré du gabarit 200 (figure 6). Cet ensemble est alors accosté sur le bord d'attaque 311 d'une préforme d'aube directrice de sortie 300 (figure 7). Le couches 20 et 30 ayant été conformées à la forme exacte du bord de fuite de l'aube à fabriquer et transférées à partir du gabarit dans la cavité 141 du clinquant 140, on assure une interface de fixation continue entre le clinquant 140 et le bord d'attaque 311 de la préforme 300.

L'aube en matériau composite est obtenue à partir d'un renfort fibreux densifié par une matrice. Dans ce cas, elle est fabriquée à partir d'une préforme fibreuse pouvant être obtenue de différentes façons connues de l'homme du métier. Typiquement, la préforme peut être obtenue directement par tissage tridimensionnel (3D) de fils (formés par exemple de fibres de carbone) ou par drapage de tissus fibreux bidimensionnels. La fabrication d'une aube directrice de sortie en matériau composite obtenue à partir d'un renfort fibreux réalisé par tissage tridimensionnel et densifié par une matrice est notamment décrite dans le document WO2013088040. Dans l'exemple décrit ici, la préforme d'aube directrice de sortie 300 est obtenue à partir d'une pluralité de strates ou plis bidimensionnels (tissu 2D) en fibres de carbone pré-imprégnés et drapés. La préforme d'aube directrice de sortie peut également être obtenue à partir d'un renfort fibreux en fibres de carbone réalisé par tissage tridimensionnel, le renfort ayant été imprégné avec une résine thermodurcissable, par exemple une résine de type époxy.

Alternativement, ces aubes en matériau composite peuvent être obtenues directement par injection dans un moule d'une résine thermoplastique (TP) renforcée par des charges courtes, longues, etc.. Dans ce cas la résine n'est pas totalement transformée (polymérisée) afin de permettre sa cocuisson avec l'ensemble formé par le clinquant et les première et deuxième couches fixées sur la surface de la cavité du clinquant.

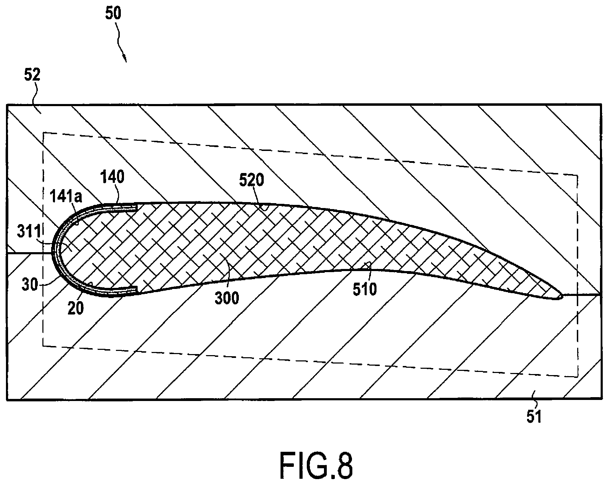

Le procédé de fabrication de l'aube se poursuit en plaçant la préforme 300 et l'ensemble formé par le clinquant 140 et les première et deuxième couches 20 et 30 positionné sur le bord d'attaque 311 de la préforme 300 dans un moule de cuisson 50. De façon connue, le moule de cuisson 50 comprend deux coquilles 51 et 52 comportant chacune respectivement une empreinte 510 et 520, les empreintes 510 et 520 formant, une fois réunies (i.e. après la fermeture du moule), une cavité de moulage 530 correspondant à la forme de l'aube à fabriquer (figure 8).

Le moule 50 est alors chauffé à une température permettant d'obtenir la cocuisson de la préforme 300 avec l'ensemble formé par le clinquant 140 et les première et deuxième couches 20 et 30. Les différentes couches, à savoir la préforme pré-imprégnée et la deuxième couche (couche d'adhésif), ont des cycles de cuisson compatibles permettant de réaliser la polymérisation des éléments en même temps. Le moule peut être chauffé via les plateaux de la presse, en autoclave, ou être muni de moyens de chauffage , le chauffage étant réalisé suivant une rampe de température définie jusqu'à une température permettant la polymérisation des différents polymères, une pression étant appliquée au cours de cette montée en température afin de maitriser le fluage. Un palier de polymérisation est ensuite appliqué suivi d'une redescente en température suivant une nouvelle rampe définie. La polymérisation des couches 20 et 30 a lieu en même temps que la polymérisation de la résine de la préforme 300. Les résines étant compatibles, les couches 20, 30 et la préforme 300 deviennent solidaires lors de la cuisson.

Après la cocuisson, l'aube est démoulée. Elle peut éventuellement subir un cycle de post-cuisson pour améliorer ses caractéristiques thermomécaniques (augmentation de la température de transition vitreuse). Aucun usinage n'est nécessaire puisque, la pièce étant moulée, elle respecte les cotes exigées. On obtient alors l'aube 100 illustrée sur la figure 1 qui comprend un corps d'aube 110 muni de plateformes interne 120 et externe 130 en matériau composite avec le clinquant métallique 140 collé sur le bord d'attaque 111 de l'aube 100.

Le procédé de l'invention s'applique également notamment à la fabrication d'aubes mobiles avec ou sans plateformes telles que des aubes de soufflante et des aubes à angle de calage variable utilisées sur des moteurs non carénés (« open rotor »).

## Revendications

1. Procédé de fabrication d'une aube (100) en matériau composite à bord d'attaque métallique rapporté pour moteur aéronautique à turbine à gaz, le procédé comprenant :
- le drapage successif, sur un gabarit (211) du bord d'attaque (111) de l'aube (100) à fabriquer, d'une première couche d'un matériau de base (20) et d'une deuxième couche d'un matériau adhésif (30),
- le transfert des première et deuxième couches (20, 30) drapées dans la cavité (141) d'un clinquant métallique (140),
- l'accostage du clinquant (140) comprenant les première et deuxième couches (20, 30) drapées sur le bord d'attaque (311) d'une préforme d'aube (300) comprenant un renfort fibreux imprégné avec un précurseur d'une matrice,
- la cocuisson de la préforme d'aube (300) et des première et deuxième couches (20, 30) drapées de manière à obtenir une aube en matériau composite (100) comportant sur son bord d'attaque (111) un clinquant métallique collé (140).

2. Procédé selon la revendication 1, dans lequel l'étape de transfert des première et deuxième couches (20, 30) drapées dans la cavité (414) du clinquant métallique (140) comprend le placement du clinquant métallique sur la couche de matériau adhésif (30) et le retrait de l'ensemble formé par le clinquant (140) et les première et deuxième couches (20, 30) du gabarit (211) du bord d'attaque.

3. Procédé selon la revendication 2, comprenant en outre, après le placement du clinquant métallique (140) sur la couche de matériau adhésif (30) et avant le retrait de l'ensemble formé par le clinquant et les première et deuxième couches drapées (20, 30), la découpe des parties desdites première et deuxième couches drapées s'étendant au-delà du clinquant.

4. Procédé selon l'une quelconque des revendications 1 à 3, comprenant en outre, avant le drapage des première et deuxième couches (20, 30) sur le gabarit (211) du bord d'attaque, le dépôt d'une couche antiadhésive sur le gabarit.

5. Procédé selon l'une quelconque des revendications 1 à 4, comprenant en outre, avant le drapage des première et deuxième couches (20, 30) sur le gabarit (211) du bord d'attaque, l'ajustement du clinquant sur le gabarit.

6. Procédé selon l'une quelconque des revendications 1 à 5, dans lequel le matériau de base de la première couche (20) est choisi parmi : fibres de verre, fils fins de bronze, fibres de carbone.

7. Procédé selon l'une quelconque des revendications 1 à 6, dans lequel le matériau adhésif de la deuxième couche (30) est choisi parmi : adhésif époxy, adhésif époxy armé, film adhésif époxy, film adhésif époxy armé.

8. Application du procédé selon l'une quelconque des revendications 1 à 7 à la fabrication d'une aube de soufflante, d'une aube directrice de sortie, d'une aube directrice d'entrée, ou d'une aube à angle de calage variable.

## Patentansprüche

1. Verfahren zur Herstellung einer Schaufel (100) aus Verbundmaterial mit einer angestückten metallischen Vorderkante für ein Gasturbinenflugtriebwerk, wobei das Verfahren umfasst:
- das aufeinanderfolgende Drapieren einer ersten Schicht aus einem Basismaterial (20) und einer zweiten Schicht aus einem haftenden Material (30) auf einem Modell (211) der Vorderkante (111) der herzustellenden Schaufel (100),
- das Übertragen der ersten und der zweiten drapierten Schicht (20, 30) in den Hohlraum (141) einer Metallfolie (140),
- das Anlegen der Folie (140), die die drapierte erste und zweite Schicht (20, 30) umfasst, an die Vorderkante (311) einer Schaufelvorform (300), die eine mit einer Vorstufe einer Matrix imprägnierte Faserverstärkung umfasst,
- das gemeinsame Brennen der Schaufelvorform (300) und der ersten und der zweiten drapierten Schicht (20, 30), derart, dass eine Schaufel aus Verbundmaterial (100) erhalten wird, die an ihrer Vorderkante (111) eine geklebte Metallfolie (140) umfasst.

2. Verfahren nach Anspruch 1, wobei der Schritt des Übertragens der ersten und der zweiten drapierten Schicht (20, 30) in den Hohlraum (414) der Metallfolie (140) das Platzieren der Metallfolie auf der Schicht aus haftendem Material (30) und das Entfernern der von der Folie (140) und der ersten und der zweiten Schicht (20, 30) gebildeten Anordnung von dem Modell (211) der Vorderkante umfasst.

3. Verfahren nach Anspruch 2, das ferner nach dem Platzieren der Metallfolie (140) auf der Schicht aus haftendem Material (30) und vor dem Entfernen der von der Folie und der ersten und der zweiten drapierten Schicht (20, 30) gebildeten Anordnung das Ausschneiden der Teile der ersten und der zweiten drapierten Schicht umfasst, die sich über die Folie hinaus erstrecken.

4. Verfahren nach einem der Ansprüche 1 bis 3, das ferner vor dem Drapieren der ersten und der zweiten Schicht (20, 30) auf dem Modell (211) der Vorderkante das Aufbringen einer Antihaftschicht auf dem Modell umfasst.

5. Verfahren nach einem der Ansprüche 1 bis 4, das ferner vor dem Drapieren der ersten und der zweiten Schicht (20, 30) auf dem Modell (211) der Vorderkante das Anpassen der Folie auf dem Modell umfasst.

6. Verfahren nach einem der Ansprüche 1 bis 5, wobei das Basismaterial der ersten Schicht (20) aus Folgendem ausgewählt wird: Glasfasern, Bronzefasern, Kohlenstofffasern.

7. Verfahren nach einem der Ansprüche 1 bis 6, wobei das haftende Material der zweiten Schicht (30) aus Folgendem ausgewählt wird: Epoxidharzkleber, armierter Epoxidharzkleber, Epoxidharzkleberfilm, armierter Epoxidharzkleberfilm.

8. Anwendung des Verfahrens nach einem der Ansprüche 1 bis 7 auf die Herstellung einer Gebläseschaufel, einer Austrittsleitschaufel, einer Eintrittsleitschaufel oder einer Schaufel mit variablem Einstellwinkel.

## Claims

1. A method for manufacturing a vane (100) from a composite material with a fitted metal leading edge for an aeronautical gas turbine engine, the method comprising:
- the successive draping, on a template (211) of the leading edge (111) of the vane (100) to be manufactured, of a first layer of a base material (20) and of a second layer of an adhesive material (30),
- the transfer of the first and second draped layers (20, 30) in the recess (141) of a metal foil (140),
- the positioning of the foil (140) comprising the first and second draped layers (20, 30) alongside the leading edge (311) of a vane preform (300) comprising a fiber reinforcement impregnated with a precursor of a matrix,
- the co-curing of the vane preform (300) and of the first and second draped layers (20, 30) so as to obtain a vane made of composite material (100) including on its leading edge (111) a bonded metal foil (140).

2. The method according to claim 1, wherein the step of transferring the first and second draped layers (20, 30) in the recess (414) of the metal foil (140) comprises the installation of the metal foil on the adhesive material layer (30) and the removal of the assembly formed by the foil (140) and the first and second layers (20, 30) from the template (211) of the leading edge.

3. The method according to claim 2 further comprising, after installation of the metal foil (140) on the adhesive material layer (30) and before the removal of the assembly formed by the foil and the first and second draped layers (20, 30), the cutting out of the portions of said first and second draped layers extending beyond the foil.

4. The method according to any one of claims 1 to 3 further comprising, before the draping of the first and second layers (20, 30) on the template (211) of the leading edge, the deposition of an anti-adhesive layer on the template.

5. The method according to any one of claims 1 to 4, further comprising, before the draping of the first and second layers (20, 30) on the template (211) of the leading edge, the adjustment of the foil on the template.

6. The method according to any one of claims 1 to 5, wherein the base material of the first layer (20) is chosen from: glass fibers, fine bronze yarns, carbon fibers.

7. The method according to any one of claims 1 to 6, wherein the adhesive material of the second layer (30) is chosen from: epoxy adhesive, reinforced epoxy adhesive, epoxy adhesive film, reinforced epoxy adhesive film.

8. An application of the method according to any one of claims 1 to 7 to the manufacture of a fan vane, an outlet guide vane, an inlet guide vane, or a variable stator vane.
